# EUROPEAN PATENT SPECIFICATION

(11) **EP 4 457 895 B1**
(45) Date of publication and mention of the grant of the patent: **12.11.2025**
(21) Application number: 22839364.1
(22) Date of filing: 22.12.2022
(51) Int. Cl.: H01M 50/572, H02J 7/00, G08B 13/14, G08B 13/06, H01M 10/44, H01M 10/48, H01M 10/42

(54) **BATTERY SYSTEM WITH ANTI-THEFT CONTROL INCLUDING A KILL SWITCH CIRCUIT**
BATTERIESYSTEM MIT DIEBSTAHLSICHERUNG MIT NOTSTOPPSCHALTERSTROMKREIS
SYSTÈME DE BATTERIE AVEC COMMANDE ANTI-VOL COMPRENANT UN CIRCUIT D'ARRÊT D'URGENCE

(30) Priority: 28.12.2021 EP 21218023
(43) Date of publication of application: 06.11.2024
(73) Proprietor: Polarium Energy Solutions AB, 113 63 Stockholm (SE)
(72) Inventor: FORSLÖF, Johan, 113 63 Stockholm (SE); KROHN, Ulf, 113 63 Stockholm (SE); DUNGE, Andreas, 113 63 Stockholm (SE)
(74) Representative: AWA Sweden AB
(86) International application number: PCT/EP2022/087612
(87) International publication number: WO 2023/126323

(56) References cited:
- CN-A- 107 276 179
- CN-A- 107 425 223
- CN-A- 109 541 480
- DE-A1- 102019 129 118
- KR-A- 20170 117 192
- US-A1- 2016 351 033

## Description

### Technical field

The present disclosure relates generally to the field of battery systems. More specifically it relates to methods and devices for battery theft deterrence.

### Background

Battery systems are used in many applications all over the world. As the world moves toward a more renewable-based energy system, energy storage will become increasingly important. Battery systems often provide backup power for essential equipment in case of failure of a main power supply. These backup installations are especially important in regions having unstable electricity grids. In such regions, theft of batteries can be a large problem. The theft may occur either when the battery system is installed, or during transport or storage prior to use.

An example of prior art may be found in CN107425223 relating to a multifunctional acid battery with GPS positioning.

### Summary

It is therefore an object of the present invention to provide improved theft deterrence for batteries. This and other objects are achieved by means of a battery system and a method as defined in the appended independent claims. Other embodiments are defined by the dependent claims.

According to a first aspect of the present disclosure, a battery system is provided. The battery system comprises a battery cell pack and a sensor unit comprising a charge detection sensor arranged to detect a level of charge of the battery cell pack and at least one further sensor. The battery system further comprises a cell protection unit arranged between the battery cell pack and a terminal of the battery system. The battery system further comprises a kill switch circuit. The kill switch circuit comprises a load and a switch. The load and the switch are arranged in series over the battery cell pack. The switch is configured initially to be in an open state. Once closed, the switch is configured to remain in a closed state. The battery system further comprises a controller. The controller is configured to receive measurements from the sensor unit. The controller is further configured to detect, using measurements from the charge detection sensor, the level of charge being below a predetermined threshold. Upon detection of the level of charge being below a predetermined threshold, the controller is configured to disconnect the terminal from the battery cell pack using the cell protection unit. The controller is further configured to detect an unauthorized displacement of the battery cell pack outside of an allowed range, based on measurements received from the at least one further sensor. Upon detection of the unauthorized displacement of the battery cell pack, the controller is further configured to close the switch of the kill switch circuit to discharge the battery cell pack to a permanently depleted state.

An unauthorized displacement may for example be a dangerous or harmful displacement, such as the battery cell pack, or the battery system, being dropped or shaken during transport or due to an earthquake. An unauthorized displacement may also be a displacement due to theft of the battery cell pack, or more generally, of the battery system.

When an unauthorized displacement (of a magnitude) outside an allowed range (or above a threshold) is detected, the kill switch circuit is closed. The kill switch circuit is configured to remain closed such that the battery cell pack is discharged to a permanently depleted state, a complete or full discharge. For some embodiments, after the battery cell pack is discharged below a value for which the battery cell pack is considered to be completely depleted or at least not reusable, the switch may be opened again. The kill switch functionality is irreversible. Once the kill switch circuit is closed, it is thereafter not possible to recover the battery cell pack to a working state, i.e. a state in which the battery cell pack as an usable state of charge. For example, the switch of the kill switch circuit may comprise a bistable relay.

The cell protection unit may be arranged to protect the battery cell pack from being discharged too deeply via the terminals. The cell protection unit may for example comprise a MOSFET bridge and/or a circuit breaker. The kill switch circuit is, however, arranged closer to the battery cell pack than the cell protection unit, relative to the terminals of the battery cell pack. For example, the kill switch circuit (including the kill switch) may be connected in parallel to the battery cell pack, i.e., upon the two terminals or ends of the battery cell pack, while the cell protection unit may be connected in series between a terminal or end of the battery cell pack and a terminal of the battery system. Expressed differently, the kill switch circuit is arranged inside (or within) the cell protection unit, i.e. closer to the battery cell pack. Therefore, the discharge caused by the kill switch circuit cannot be stopped by the cell protection unit.

If the battery system has been stolen, discharging the battery cell pack to a permanently depleted state makes the battery system unusable and may therefore discourage future theft of battery systems (or cell packs).

Further, a damaged battery system may be dangerous. Lithium ion batteries, in particular, may become overheated or catch fire if they are damaged. Fully discharging a battery system in automatic manner in response to a potentially harmful displacement may decrease the risk of accidents and thereby increase the safety of the battery system.

According to some embodiments, the battery system may further comprise a wireless communication unit. Upon detection of the unauthorized displacement, the controller may further be configured to externally transmit information concerning the unauthorized displacement of the battery cell pack (or of the battery system), using the wireless communication unit. The controller may further be configured to receive an external confirmation. Upon receipt of the external confirmation, the controller may be further configured to perform the closing of the switch of the kill switch circuit.

For example, the controller may transmit a signal or message indicating that the battery cell pack (or the battery system) has been displaced to a remote operator. The operator may then verify that the displacement is unauthorized and send a confirmation back to the battery system controller. For example, the operator could verify whether there is an operator on site performing maintenance, or check if any other security systems at the site are indicating an intrusion. Including verification technology may decrease the risk of fully depleting the battery cell pack in response to e.g. a faulty signal, or to an authorized displacement.

According to some embodiments, the battery system may be configured to be set in an anti-theft mode. The controller may be configured to close the switch only if the anti-theft mode is activated.

For example, the anti-theft mode may be disabled during transport and maintenance to allow displacement of the battery system. Once the battery system is stored or installed, the anti-theft mode may be enabled.

According to some embodiments, the at least one further sensor may comprise a tilt sensor. The detection of an unauthorized displacement of the battery cell pack (or the battery system) may comprise detecting that the battery system has been tilted over a predetermined tilt angle.

Once a battery system is installed, it most often stays in place. A small tilting angle may be allowed, to account for errors and other unforeseen events. However, a larger tilting angle, such as a tilting angle larger than (over) a predetermined threshold, may indicate that the battery system has been removed from its place of installation. This may in turn indicate that the battery cell pack has been moved (or has been stolen).

Generally, detection of an unauthorized displacement of the battery cell pack is achieved by means of a sensor of the sensor unit of the battery system. In other words, as the battery cell pack is part of the battery system, an unauthorized displacement of the battery system indicates an unauthorized displacement of the battery cell pack.

Examples of tilting sensors include inclinometers, liquid tilt sensors, solid tilt sensors, tilt switches, accelerometers, etc.

According to some embodiments, the at least one further sensor may comprise an acceleration sensor. The detection of unauthorized displacement of the battery cell pack (or the battery system itself) may comprise detecting a change in acceleration of the battery system outside a predetermined acceleration range.

An acceleration sensor may for example detect that the battery system is moved, dropped, or shaken. An acceleration sensor may therefore be able to detect that the battery system is removed from its installation or transported. It may also be used to detect an impact or an earthquake.

According to some embodiments, the at least one further sensor may comprise a position sensor. The detection of displacement of the battery cell pack (or battery system) may comprise detecting the battery system being moved outside a predefined area.

The position sensor may for example form part of a global positioning system, such as a global navigation satellite system (GNSS). For example, the position of the battery system may be determined in a local frame or in a global frame. The predefined area may for example be defined by a geofence.

Alternatively, the position sensor may determine the position or distance relative to a fixed point. For example, the position sensor may determine the distance from a transmitter or base station. The predefined area may be defined by a radius around the fixed point.

According to some embodiments, the battery system may be configured to be fastened to an immobile object. The detection of displacement may comprise detecting that the battery system is not in contact with and/or is not in the vicinity of the immobile object.

The immobile object may for example be a wall, floor, or part of a fixed installation, such as a rack.

For example, the battery system may comprise a mechanical switch which is activated or deactivated when the battery system is removed from the immobile object.

The battery system may comprise a sensor detecting the presence of the immobile object. The immobile object no longer being present may correspond to displacement of the battery system (and as a result of the battery cell pack). For example, the at least one sensor may comprise a hall effect sensor, and the immobile object may cause a magnetic field detectable by said hall effect sensor.

According to some embodiments, the controller may further be configured to receive an instruction to discharge the battery cell pack from an external sender (or recipient). Upon receipt of the instruction, the controller may be further configured to close the switch of the kill switch circuit.

This may allow a remote operator to initiate the complete discharge of the battery cell pack. Remote initiation of the complete discharge may for example be used if theft of the battery system is discovered using other security systems, such as surveillance cameras, alarm systems etc.

The battery system may comprise input means for receiving an instruction to discharge from an onsite operator. The onsite operator, or remote operator, may for example initiate the full depletion (complete discharge) of the battery cell pack at the end of life, to prepare the battery for end of life (EOL) transport and/or recycling.

Lithium batteries are classed as dangerous goods in transportation, especially if the battery is damaged. However, if the state of charge can be reduced to a safe limit, the battery module may be classified as safe and different shipping regulations may therefore apply. In the depleted state, the battery system may therefore be considered approved for (usual/standard) transportation again.

Further, if battery cell packs (or battery systems) are fully depleted before EOL transport, they become less desirable to steal. Discharging the battery cell packs to a fully depleted state before EOL transport may therefore increase the safety for the transport personnel.

According to a second aspect of the present disclosure, an anti-theft method for a battery system is provided. The battery system comprises a battery cell pack, a sensor unit comprising a charge detection sensor arranged to detect a level of charge of the battery cell pack and at least one further sensor, a cell protection unit arranged between the battery cell pack and a terminal of the battery system, and a kill switch circuit comprising a load and a switch arranged in series over the battery cell pack, said switch being configured initially to be in an open state and, once closed, to remain in a closed state. The method comprises detecting, using measurements from said charge detection sensor, the level of charge being below a predetermined threshold. Upon detection of the level of charge being below a predetermined threshold, disconnecting the terminal from the battery cell pack using the cell protection unit. The method further comprises detecting, based on measurements from the at least one further sensor, an unauthorized displacement of the battery system outside of an allowed range. Upon detection of the unauthorized displacement of the battery system, the method further comprises discharging a battery cell pack of the battery system to a permanently depleted state by closing the switch of the kill-switch circuit.

According to some embodiments, the method may further comprise, upon detection of the unauthorized displacement of the battery system, externally transmitting information concerning the unauthorized displacement of the battery system. The method may further comprise receiving an external confirmation. The method may further comprise, upon receipt of the external confirmation, perform the discharge of the battery cell pack.

According to some embodiments, the method may further comprise setting the battery system in an anti-theft mode. The method may further comprise only discharging (4070) the battery cell pack of the battery system to a permanently depleted state if the battery system is in said anti-theft mode.

According to some embodiments, the at least one further sensor may comprise comprises a tilt sensor. The detecting an unauthorized displacement of the battery system may comprise detecting that the battery system has been tilted over a predetermined tilt angle.

According to some embodiments, the at least one further sensor may comprise an acceleration sensor. The detecting an unauthorized displacement of the battery system may comprise detecting a change in acceleration of the battery system outside a predetermined acceleration range.

According to some embodiments, the at least one further sensor may comprise a position sensor. The detecting an unauthorized displacement of the battery system may comprise detecting the battery system being moved outside a predefined area.

Any embodiment described herein in relation to the first aspect of the present disclosure may be combinable with other embodiments also described herein in relation to the second aspect of the present disclosure, and the present disclosure relates to all combinations of features.

### Brief description of drawings

Exemplifying embodiments will now be described in more detail, with reference to the following appended drawings:
Figure 1 is a block diagram of a battery system, in accordance with some embodiments;
Figure 2 is a block diagram of a battery system, in accordance with some embodiments, fastened to an immobile object;
Figure 3 is a block diagram of a battery system, in accordance with some embodiments, fastened to an immobile object;
Figure 4 is a flow chart illustrating an anti-theft method for a battery system, in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

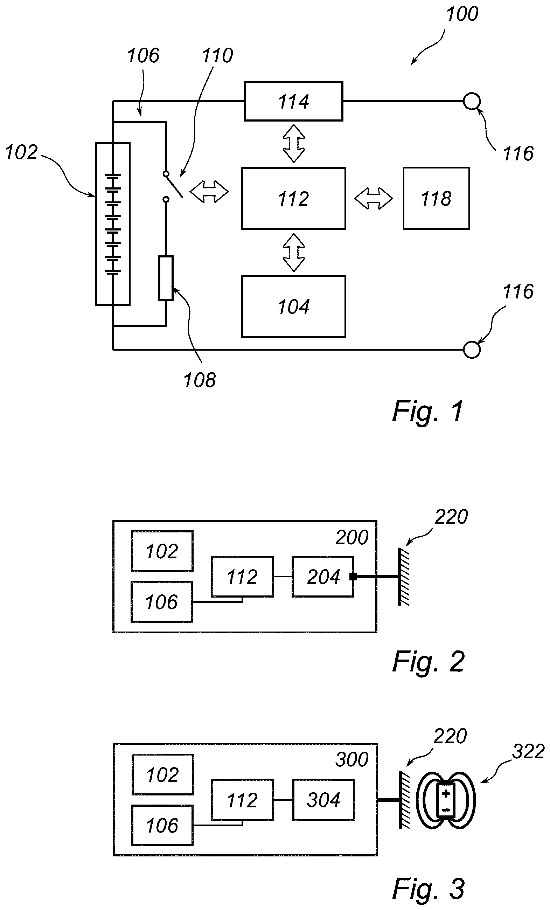

With reference to Figures 1, 2 and 3, battery systems, in accordance with some embodiments, will be described.

Figure 1 is a block diagram of a battery system 100 in accordance with some embodiments. The battery system 100 comprises a battery cell pack 102. The battery cell pack 102 may for example comprise a plurality of lithium-ion battery cells. A kill switch circuit 106 comprising a switch 110 and a load 108 is arranged over the battery cell pack 102. The switch 110 is initially in an open state, as is illustrated in Figure 1. The switch is possible to engage (close) once, and, after the initiation (closing), the switch 110 will remain in a closed state, such that the load 108 will remain connected with the battery cell pack 102. When the load 108 is connected with the battery cell pack 102, the load 108 is configured to discharge the battery cell pack 102 to a permanently depleted state. For example, the load may comprise a resistor dimensioned to discharge the battery fully within a fairly short timeframe, such as 10-48h. The switch 110 is configured to remain in the closed state at least until the battery cell pack 102 has been discharged below a value for which the battery cell pack 102 is considered to be completely depleted or at least not reusable.

The closing of the switch 110 is initiated by a controller 112. The controller 112 is in connection (or communication) with a sensor unit 104 comprising a charge detection sensor arranged to detect a level of charge of the battery cell pack 102 and at least one further sensor, from which it is configured to receive measurements. The controller 112 is further configured to detect, based on the received measurements, that the battery system 100, and thus the battery cell pack 102, is, or has been, moved (displaced) without authorization.

One or more sensors may be used to detect unauthorized displacement outside an allowed range. For example, the at least one further sensor of the sensor unit 104 may comprise a tilt sensor, and the controller 112 may be configured to detect that the battery system 100 has been (or is) tilted at an angle exceeding a predetermined tilt angle.

The at least one further sensor may comprise an acceleration sensor. The controller 112 may be configured to detect a change in acceleration of the battery system outside of a predetermined acceleration range.

The at least one further sensor may comprise a position sensor. The controller 112 may be configured to detect that the battery system 100 (and thus the battery cell pack 102) is moved (displaced) outside a predetermined area.

Further, as is illustrated in Figures 2 and 3, the battery system 200, 300 may be configured to be fastened to an immobile object 220. The controller 112 may be configured to detect that the battery system 200, 300 is not in contact with and/or is not in the vicinity of the immobile object 220.

An immobile object 220 may be fastened or arranged in such a way that it is practically very hard to dislocate it. The immobile object 220 may for example be a wall or part of a building.

Figure 2 is a schematic illustration of a battery system 200. The battery cell pack 102, the kill switch circuit 106 and the controller 112 of the battery system 200 may be equivalent to those described above with reference to Figure 1. In Figure 2, the battery system 200 is fastened to an immobile object 220 in such a way that a mechanical and/or electrical connection is formed between the sensor unit 204 and a portion of the immobile object 220. If the battery system 200 is removed (disconnected/ unfastened) from the immobile object 220, the sensor unit 204 may be configured to detect that the battery system 200 is no longer in contact with the immobile object 220. The sensor unit 204 may for example comprise a mechanical or electrical switch which is switched or otherwise triggered if the battery system 200 is removed from the immobile object 220.

Figure 3 is an illustration of a battery system 300 similar to the battery system 200 of Figure 2. In Figure 3, however, the immobile object 220 comprises an entity generating a magnetic field 322. The at least one further sensor of the sensor unit 304 may be configured to detect the presence of the magnetic field 322. The controller 112 may be configured to detect an unauthorized displacement of the battery system 300 (and thus of its battery cell pack) outside of an allowed range based on a change in, or absence of, the magnetic field 322. One example of a sensor which may be configured to detect the presence of a magnetic field is a Hall sensor.

Once an unauthorized displacement of the battery system 100 (and thus the battery cell pack) outside an allowed range has been detected based on the measurements from the at least one further sensor of the sensor unit 104, the controller 112 may be configured to close the switch 110.

The battery system 100 further comprises a cell protection unit 114, arranged between the battery cell pack 102 and a terminal 116 of the battery system 100. For this purpose, as mentioned above, the sensor unit 104 comprises a charge detection sensor arranged to detect a level of charge of the battery cell pack 102. The controller 112 may further be configured to monitor the level of charge of the battery cell pack 102. If the controller 112 detects that the level of charge is below a predetermined threshold, the controller 112 is configured to disconnect the battery cell pack 102 from the terminal 116 using the cell protection unit 114, such that the battery cell pack 102 cannot be further discharged via the terminals 116.

However, as the cell protection unit 114 is arranged outside of the kill switch circuit 106, the kill switch circuit 106 may discharge the cell pack 102 to apermanently depleted state, despite the cell protection unit 114 being activated.

Still referring to Figure 1, the kill switch circuit 106 (or the kill switch branch 106) including the kill switch 110 and the load 108 connected in series may be electrically connected in parallel to the battery cell pack 102, i.e., upon the two terminals or ends of the battery cell pack 102. The cell protection unit 114 may be electrically connected in series between a terminal or end of the battery cell pack 102 and a terminal 116 of the battery system 100.

Considering an electrical node or point of contact corresponding to an end of the battery cell pack 102, the cell protection unit 114 is connected from this electrical node to a terminal 116 of the battery system and the kill switch circuit 106 is connected in parallel to the battery cell pack 102, from this electrical node (or point of contact) to the other end of the battery cell pack 102.

Optionally, the battery system 100 may further comprise a communication unit 118 for external communication with e.g. a remote operator.

The controller 112 may be configured to require an external confirmation before closing the kill switch 110. When the unauthorized displacement of the battery system 100 has been detected, the controller 112 may be configured to transmit externally, via the communication unit 118, information relating to the unauthorized displacement. For example, the controller 112 may send an alert to a remote operator. The controller 112 may be configured to await an external confirmation and to close the kill switch 110 upon receipt of the external confirmation.

The controller 112 may optionally be configured to receive, from an external sender, an instruction to discharge the battery cell pack. The instruction may for example be received using the communication circuit 118. The controller 112 may be configured to close the kill switch 110 in response to receiving the instruction. Alternatively, the controller 112 may be configured to externally transmit information relating to the instruction, such as an alert, and await confirmation before closing the kill switch 110.

The battery system 100 may optionally be configured to be set in an anti-theft mode. The controller 112 may be configured to validate that the anti-theft mode is activated before closing the switch 110. Alternatively, the controller 112 may be configured only to detect/register displacement if the battery system 100 is set in the anti-theft mode.

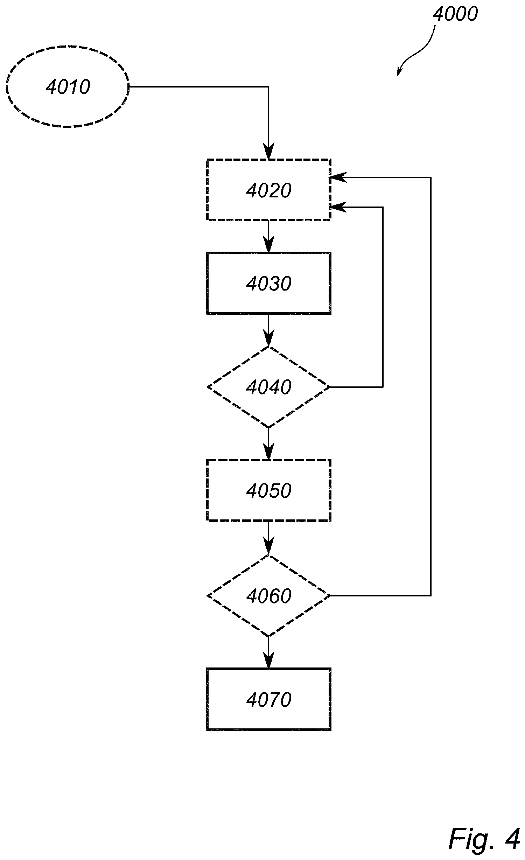

With reference to Figure 4, an anti-theft method 4000 for a battery system, in accordance with some embodiments, will be described.

Figure 4 is a flow chart illustrating steps of an anti-theft method 4000, optional method steps are illustrated with dashed lines.

The method 4000 may for example be implemented, at least in part, in a controller of a battery system, such as any of the battery systems 100, 200, 300 described above with reference to the preceding figures.

The method 4000 may comprise monitoring, at step 4020, a state of a battery system using at least one sensor. For example, at least one of an orientation, a position, a speed, and an acceleration of the battery system may be monitored. Different types of sensors may be used, such as the examples described above with reference to Figures 1-3.

The method 4000 comprises detecting, at step 4030, an unauthorized displacement of the battery system (and thus of its battery cell pack) outside of an allowed range, based on measurement from the at least one sensor. The detection of an unauthorized displacement may be based on a change in a state of the battery system. For example, the detection of an unauthorized displacement may comprise detecting a change in orientation, position, speed, and/or acceleration of the battery system.

Upon detection of the unauthorized displacement of the battery system (and its battery cell pack), the method further comprises, at step 4070, discharging the battery cell pack of the battery system to a permanently depleted state.

The method 4000 may optionally be initiated, at step 4010, by setting the battery system in an anti-theft mode.

As another option, the method may comprise, at step 4040, verifying whether an anti-theft mode of the battery system is activated. If the anti-theft mode is not activated, the monitoring step 4020 is resumed. Alternatively, if the anti-theft mode is not activated, the method 4000 may be restarted, or the detection step 4030 resumed. If the anti-theft mode is activated, the discharge step 4070 is performed.

Further, the method 4000 may comprise verification steps 4050, 4060. After displacement has been detected at step 4030, and optionally after the anti-theft mode has been verified at step 4040, the method may comprise externally transmitting, at step 4050, information concerning the unauthorized displacement of the battery system. For example, the external transmission may be directed to an operator who may approve or reject the discharge. The method further comprises receiving, at step 4060, an external confirmation. If an external confirmation is received, at step 4060, the discharge step 4070 is performed. If no confirmation is received, or if an external rejection is received at step 4060, the monitoring step 4020 is instead resumed. Alternatively, if no confirmation is received or an external rejection is received, the method 4000 may be restarted, or the detection step 4030 resumed.

The person skilled in the art realizes that the present invention by no means is limited to the preferred embodiments described above. On the contrary, many modifications and variations are possible within the scope of the appended claims.

For example, any part of the detailed description referring to the battery system 100 of Figure 1 may be applicable to the battery systems 200, 300 of Figures 2 and 3, and vice versa.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A battery system (100) comprising:
a battery cell pack (102);
a sensor unit (104) comprising a charge detection sensor arranged to detect a level of charge of the battery cell pack and at least one further sensor;
a cell protection unit (114) arranged between the battery cell pack and a terminal (116) of the battery system;
a kill switch circuit (106) comprising a load (108) and a switch (110) arranged in series over the battery cell pack, said switch being configured initially to be in an open state and, once closed, to remain in a closed state; and
a controller (112) configured to:
receive measurements from said sensor unit;
detect, using measurements from said charge detection sensor, the level of charge being below a predetermined threshold;
upon detection of the level of charge being below a predetermined threshold, disconnect the terminal from the battery cell pack using the cell protection unit;
detect, using measurement from the at least one further sensor, an unauthorized displacement of said battery cell pack outside of an allowed range; and
upon detection of said unauthorized displacement of the battery cell pack, close the switch of the kill switch circuit to discharge said battery cell pack to a permanently depleted state.

2. The battery system of claim 1, further comprising a wireless communication unit (118), wherein said controller is further configured to, upon detection of said unauthorized displacement of the battery cell pack:
externally transmit information concerning the unauthorized displacement of the battery cell pack, using said wireless communication unit; and
upon receipt of an external confirmation, perform the closing of the switch of the kill switch circuit.

3. The battery system of any of the preceding claims, wherein said system is configured to be set in an anti-theft mode, and wherein said controller is configured to close said switch only if said anti-theft mode is activated.

4. The battery system of any of the preceding claims, wherein said at least one further sensor comprises a tilt sensor, and wherein the detection of unauthorized displacement of the battery cell pack comprises detecting that the battery system has been tilted over a predetermined tilt angle.

5. The battery system of any of the preceding claims, wherein said at least one further sensor comprises an acceleration sensor, and wherein the detection of unauthorized displacement of the battery cell pack comprises detecting a change in acceleration of the battery system outside a predetermined acceleration range.

6. The battery system of any of the preceding claims, wherein said at least one further sensor comprises a position sensor, and wherein said detection of unauthorized displacement of the battery cell pack comprises detecting the battery system being moved outside a predefined area.

7. The battery system of any of the preceding claims, further configured to be fastened to an immobile object (220),
wherein said detection of displacement of the battery cell pack comprises detecting that the battery system is not in contact with and/or is not in the vicinity of said immobile object.

8. The battery system of any of the preceding claims, wherein said controller is further configured to:
receive an instruction to discharge said battery cell pack from an external sender; and
upon receipt of said instruction, close the switch of the kill switch circuit.

9. An anti-theft method for a battery system comprising a battery cell pack, a sensor unit comprising a charge detection sensor arranged to detect a level of charge of the battery cell pack and at least one further sensor, a cell protection unit arranged between the battery cell pack and a terminal of the battery system, and a kill switch circuit comprising a load and a switch arranged in series over the battery cell pack, said switch being configured initially to be in an open state and, once closed, to remain in a closed state, the method comprising:
detecting, using measurements from said charge detection sensor, the level of charge being below a predetermined threshold;
upon detection of the level of charge being below a predetermined threshold, disconnecting the terminal from the battery cell pack using the cell protection unit;
detecting (4030), based on measurements from the at least one further sensor of the battery system, an unauthorized displacement of the battery system outside of an allowed range; and
upon detection of the unauthorized displacement of the battery system, discharging (4070) a battery cell pack of the battery system to a permanently depleted state by closing the switch of the kill-switch circuit.

10. The anti-theft method of claim 9, further comprising, upon detection of the unauthorized displacement of the battery system:
externally transmitting (4050) information concerning the unauthorized displacement of the battery system;
receiving (4060) an external confirmation; and
upon receipt of the external confirmation, perform the discharge of the battery cell pack.

11. The method of any of claims 9-10, further comprising:
setting the battery system in an anti-theft mode; and
only discharging the battery cell pack of the battery system to a permanently depleted state if the battery system is in said anti-theft mode.

12. The method of any of claims 9-11, wherein said at least one further sensor comprises a tilt sensor, and wherein said detecting an unauthorized displacement of the battery system comprises detecting that the battery system has been tilted over a predetermined tilt angle.

13. The method of any of claims 9-12, wherein said at least one further sensor comprises an acceleration sensor, and wherein said detecting an unauthorized displacement of the battery system comprises detecting a change in acceleration of the battery system outside a predetermined acceleration range.

14. The method of any of claims 9-13, wherein said at least one further sensor comprises a position sensor, and wherein said detecting an unauthorized displacement of the battery system comprises detecting the battery system being moved outside a predefined area.

## Patentansprüche

1. Batteriesystem (100), umfassend:
ein Batteriezellenpaket (102);
eine Sensoreinheit (104), die einen zum Detektieren eines Ladungsniveaus des Batteriezellenpakets angeordneten Ladungsdetektionssensor und mindestens einen weiteren Sensor umfasst;
eine zwischen dem Batteriezellenpaket und einem Anschluss (116) des Batteriesystems angeordnete Zellenschutzeinheit (114);
eine Kill-Switch-Schaltung (106), die eine Last (108) und einen Schalter (110) umfasst, die in Reihe über dem Batteriezellenpaket angeordnet sind, wobei der Schalter anfänglich dafür ausgelegt ist, sich in einem offenen Zustand zu befinden und, sobald er geschlossen ist, in einem geschlossenen Zustand zu bleiben; und
eine Steuerung (112), ausgelegt zum:
Empfangen von Messungen von der Sensoreinheit;
Detektieren, dass das Ladungsniveau unter einer vorbestimmten Schwelle liegt, unter Verwendung von Messungen von dem Ladungsdetektionssensor;
wenn detektiert wird, dass das Ladungsniveau unter einer vorbestimmten Schwelle liegt, Trennen des Anschlusses von dem Batteriezellenpaket unter Verwendung der Zellenschutzeinheit;
Detektieren einer unautorisierten Verschiebung des Batteriezellenpakets außerhalb eines zulässigen Bereichs unter Verwendung einer Messung von dem mindestens einen weiteren Sensor; und
wenn die unautorisierte Verschiebung des Batteriezellenpakets detektiert wird, Schließen des Schalters der Kill-Switch-Schaltung, um das Batteriezellenpaket in einen permanent entleerten Zustand zu entladen.

2. Batteriesystem nach Anspruch 1, das ferner eine drahtlose Kommunikationseinheit (118) umfasst, wobei die Steuerung ferner bei Detektion der unautorisierten Verschiebung des Batteriezellenpakets ausgelegt ist zum externen Übertragen von Informationen über die unautorisierte Verschiebung des Batteriezellenpakets unter Verwendung der drahtlosen Kommunikationseinheit; und
Durchführen des Schließens des Schalters der Kill-Switch-Schaltung nach Erhalt einer externen Bestätigung.

3. Batteriesystem nach einem der vorhergehenden Ansprüche, wobei das System dafür ausgelegt ist, in einen Diebstahlsicherungsmodus versetzt zu werden, und wobei die Steuerung dafür ausgelegt ist, den Schalter nur dann zu schließen, wenn der Diebstahlsicherungsmodus aktiviert ist.

4. Batteriesystem nach einem der vorhergehenden Ansprüche, wobei der mindestens eine weitere Sensor einen Neigungssensor umfasst und wobei die Detektion einer unautorisierten Verschiebung des Batteriezellenpakets Detektieren umfasst, dass das Batteriesystem über einen vorbestimmten Neigungswinkel hinaus gekippt wurde.

5. Batteriesystem nach einem der vorhergehenden Ansprüche, wobei der mindestens eine weitere Sensor einen Beschleunigungssensor umfasst und wobei die Detektion einer unautorisierten Verschiebung des Batteriezellenpakets Detektieren einer Änderung der Beschleunigung des Batteriesystems außerhalb eines vorbestimmten Beschleunigungsbereichs umfasst.

6. Batteriesystem nach einem der vorhergehenden Ansprüche, wobei der mindestens eine weitere Sensor einen Positionssensor umfasst und wobei die Detektion einer unautorisierten Verschiebung des Batteriezellenpakets Detektieren umfasst, dass das Batteriesystem außerhalb eines vordefinierten Bereichs gebracht wird.

7. Batteriesystem nach einem der vorhergehenden Ansprüche, das ferner dafür ausgelegt ist, an einem unbeweglichen Objekt (220) befestigt zu werden,
wobei die Detektion von Verschiebung des Batteriezellenpakets Detektieren umfasst, dass sich das Batteriesystem nicht in Kontakt mit und/oder nahe dem unbeweglichen Objekt befindet.

8. Batteriesystem nach einem der vorhergehenden Ansprüche, wobei die Steuerung ferner ausgelegt ist zum Empfangen einer Anweisung zum Entladen des Batteriezellenpakets von einem externen Absender; und Schließen des Schalters der Kill-Switch-Schaltung bei Erhalt der Anweisung.

9. Diebstahlsicherungsverfahren für ein Batteriesystem, umfassend ein Batteriezellenpaket, eine Sensoreinheit, die einen zum Detektieren eines Ladungsniveaus des Batteriezellenpakets angeordneten Ladungsdetektionssensor und mindestens einen weiteren Sensor umfasst, eine zwischen dem Batteriezellenpaket und einem Anschluss des Batteriesystems angeordnete Zellenschutzeinheit und eine Kill-Switch-Schaltung, die eine Last und einen Schalter umfasst, die in Reihe über dem Batteriezellenpaket angeordnet sind, wobei der Schalter anfänglich dafür ausgelegt ist, sich in einem offenen Zustand zu befinden und, sobald er geschlossen ist, in einem geschlossenen Zustand zu bleiben, wobei das Verfahren Folgendes umfasst:
Detektieren, dass das Ladungsniveau unter einer vorbestimmten Schwelle liegt, unter Verwendung von Messungen von dem Ladungsdetektionssensor;
wenn detektiert wird, dass das Ladungsniveau unter einer vorbestimmten Schwelle liegt, Trennen des Anschlusses von dem Batteriezellenpaket unter Verwendung der Zellenschutzeinheit;
Detektieren (4030) einer unautorisierten Verschiebung des Batteriesystems außerhalb eines zulässigen Bereichs auf der Basis von Messungen von dem mindestens einen weiteren Sensor; und
bei Detektion der unautorisierten Verschiebung des Batteriesystems Entladen (4070) eines Batteriezellenpakets des Batteriesystems in einen permanent entleerten Zustand durch Schließen des Schalters der Kill-Switch-Schaltung.

10. Diebstahlsicherungsverfahren nach Anspruch 9, das ferner bei Detektion der unautorisierten Verschiebung des Batteriesystems Folgendes umfasst:
externes Übertragen (4050) von Informationen über die unautorisierte Verschiebung des Batteriesystems;
Empfangen (4060) einer externen Bestätigung; und
Durchführen der Entladung des Batteriezellenpakets bei Erhalt der externen Bestätigung.

11. Verfahren nach einem der Ansprüche 9-10, ferner umfassend:
Versetzen des Batteriesystems in einen Diebstahlsicherungsmodus; und
Entladen des Batteriezellenpakets des Batteriesystems in einen permanent entleerten Zustand nur dann, wenn sich das Batteriesystem in dem Diebstahlsicherungsmodus befindet.

12. Verfahren nach einem der Ansprüche 9-11, wobei der mindestens eine weitere Sensor einen Neigungssensor umfasst und wobei das Detektieren einer unautorisierten Verschiebung des Batteriesystems Detektieren umfasst, dass das Batteriesystem über einen vorbestimmten Neigungswinkel hinaus gekippt wurde.

13. Verfahren nach einem der Ansprüche 9-12, wobei der mindestens eine weitere Sensor einen Beschleunigungssensor umfasst und wobei das Detektieren einer unautorisierten Verschiebung des Batteriesystems Detektieren einer Änderung der Beschleunigung des Batteriesystems außerhalb eines vorbestimmten Beschleunigungsbereichs umfasst.

14. Verfahren nach einem der Ansprüche 9-13, wobei der mindestens eine weitere Sensor einen Positionssensor umfasst und wobei das Detektieren einer unautorisierten Verschiebung des Batteriesystems Detektieren umfasst, dass das Batteriesystem außerhalb eines vordefinierten Bereichs gebracht wird.

## Revendications

1. Système de batterie (100) comprenant :
un bloc de cellules de batterie (102) ;
une unité de capteur (104) comprenant un capteur de détection de charge agencé pour détecter un niveau de charge du bloc de cellules de batterie et au moins un autre capteur ;
une unité de protection de cellule (114) disposée entre le bloc de cellules de batterie et une borne (116) du système de batterie ;
un circuit coupe-circuit (106) comprenant une charge (108) et un commutateur (110) disposés en série sur le bloc de cellules de batterie, ledit commutateur étant configuré initialement pour être dans un état ouvert et, une fois fermé, pour rester dans un état fermé ; et
un contrôleur (112) configuré pour :
recevoir des mesures de ladite unité de capteur ;
détecter, à l'aide de mesures dudit capteur de détection de charge, le niveau de charge étant inférieur à un seuil prédéterminé ;
lorsque le niveau de charge est détecté en dessous d'un seuil prédéterminé, déconnecter la borne du bloc de cellules de batterie à l'aide de l'unité de protection de cellule ;
détecter, à l'aide d'une mesure provenant de l'au moins un autre capteur, un déplacement non autorisé dudit bloc de cellules de batterie en dehors d'une plage autorisée ; et
lors de la détection dudit déplacement non autorisé du bloc de cellules de batterie, fermer l'interrupteur du circuit coupe-circuit pour décharger ledit bloc de cellules de batterie dans un état épuisé de façon permanente.

2. Système de batterie selon la revendication 1, comprenant en outre une unité de communication sans fil (118), où ledit contrôleur est en outre configuré pour, lors de la détection dudit déplacement non autorisé du bloc de cellules de batterie :
transmettre par l'extérieur des informations concernant le déplacement non autorisé du bloc de cellules de batterie, à l'aide de ladite unité de communication sans fil ; et
à réception d'une confirmation externe, fermer le commutateur du circuit coupe-circuit.

3. Système de batterie selon l'une quelconque des revendications précédentes, dans lequel ledit système est configuré pour être réglé dans un mode antivol, et dans lequel ledit contrôleur est configuré pour fermer ledit commutateur uniquement si ledit mode antivol est activé.

4. Système de batterie selon l'une quelconque des revendications précédentes, dans lequel ledit au moins un capteur supplémentaire comprend un capteur d'inclinaison, et dans lequel la détection d'un déplacement non autorisé du bloc de cellules de batterie comprend la détection du fait que le système de batterie a été incliné d'un angle d'inclinaison prédéterminé.

5. Système de batterie selon l'une quelconque des revendications précédentes, dans lequel ledit au moins un capteur supplémentaire comprend un capteur d'accélération, et dans lequel la détection d'un déplacement non autorisé du bloc de cellules de batterie comprend la détection d'un changement d'accélération du système de batterie en dehors d'une plage d'accélération prédéterminée.

6. Système de batterie selon l'une quelconque des revendications précédentes, dans lequel ledit au moins un capteur supplémentaire comprend un capteur de position, et dans lequel ladite détection d'un déplacement non autorisé du bloc de cellules de batterie comprend la détection du déplacement du système de batterie à l'extérieur d'une zone prédéfinie.

7. Système de batterie selon l'une quelconque des revendications précédentes, configuré en outre pour être fixé à un objet immobile (220),
dans lequel ladite détection du déplacement du bloc de cellules de batterie comprend la détection du fait que le système de batterie n'est pas en contact avec et/ou n'est pas à proximité dudit objet immobile.

8. Système de batterie selon l'une quelconque des revendications précédentes, dans lequel ledit contrôleur est en outre configuré pour :
recevoir une instruction de décharge dudit bloc de cellules de batterie depuis un émetteur externe ; et
à réception de ladite instruction, fermer l'interrupteur du circuit coupe-circuit.

9. Procédé antivol pour un système de batterie comprenant un bloc de cellules de batterie, une unité de capteur comprenant un capteur de détection de charge agencé pour détecter un niveau de charge du bloc de cellules de batterie et au moins un autre capteur, une unité de protection de cellules disposée entre le bloc de cellules de batterie et une borne du système de batterie, et un circuit coupe-circuit comprenant une charge et un commutateur montés en série sur le bloc de cellules de batterie, ledit commutateur étant configuré initialement pour être dans un état ouvert et, une fois fermé, pour rester dans un état fermé, le procédé comprenant les étapes suivantes :
détecter, à l'aide de mesures dudit capteur de détection de charge, le niveau de charge étant inférieur à un seuil prédéterminé ;
lorsque le niveau de charge est détecté en dessous d'un seuil prédéterminé, déconnecter la borne du bloc de cellules de batterie à l'aide de l'unité de protection de cellule ;
détecter (4030), sur la base de mesures provenant de l'au moins un autre capteur du système de batterie, un déplacement non autorisé du système de batterie en dehors d'une plage autorisée ; et
lors de la détection du déplacement non autorisé du système de batterie, décharger (4070) un bloc de cellules de batterie du système de batterie jusqu'à un état épuisé de façon permanente en fermant le commutateur du circuit coupe-circuit.

10. Procédé antivol selon la revendication 9, comprenant en outre les étapes suivantes, lors de la détection du déplacement non autorisé du système de batterie :
transmettre par l'extérieur (4050) des informations concernant le déplacement non autorisé du système de batterie ;
recevoir (4060) une confirmation externe ; et
à réception de la confirmation externe, décharger le bloc de cellules de batterie.

11. Procédé selon l'une quelconque des revendications 9 et 10, comprenant en outre les étapes suivantes :
régler le système de batterie en mode antivol ; et
ne décharger le bloc de cellules de batterie du système de batterie jusqu'à un état épuisé de façon permanente que si le système de batterie est dans ledit mode antivol.

12. Procédé selon l'une quelconque des revendications 9 à 11, dans lequel ledit au moins un capteur supplémentaire comprend un capteur d'inclinaison, et dans lequel ladite détection d'un déplacement non autorisé du système de batterie comprend la détection du fait que le système de batterie a été incliné d'un angle d'inclinaison prédéterminé.

13. Procédé selon l'une quelconque des revendications 9 à 12, dans lequel ledit au moins un capteur supplémentaire comprend un capteur d'accélération, et dans lequel ladite détection d'un déplacement non autorisé du système de batterie comprend la détection d'un changement d'accélération du système de batterie en dehors d'une plage d'accélération prédéterminée.

14. Procédé selon l'une quelconque des revendications 9 à 13, dans lequel ledit au moins un capteur supplémentaire comprend un capteur de position, et dans lequel ladite détection d'un déplacement non autorisé du système de batterie comprend la détection du déplacement du système de batterie à l'extérieur d'une zone prédéfinie.
